# DEMANDE DE BREVET EUROPEEN

(11) **EP 1 067 035 A1**
(43) Date de publication de la demande: **10.01.2001**
(21) Numéro de dépôt: 99202268.1
(22) Date de dépôt: 09.07.1999
(51) Int. Cl.: B61D 37/00, B60N 3/00, A47B 5/06

(54) **Table pour véhicules**

(71) Demandeur: Inov sprl, 5380 Franc-Waret (BE)
(72) Inventeur: Tilman, Jacques, 4550 Villers-le Temple (BE)
(74) Mandataire: Meyers, Ernest

(57) **Abrégé**

La table, qui est plus particulièrement conçue pour des wagons de chemin de fer, comporte un plateau (10) supporté, du côté extérieur, par une tablette (12) solidaire de la paroi du véhicule et, du côté intérieur, par un pied vertical (18). Le plateau (10) est relié à la tablette (12) par une articulation (16) et au pied (18) par une glissière permettant ainsi au plateau (10) de pouvoir pivoter horizontalement autour de l'articulation (16).

## Description

La présente invention concerne une table pour véhicules de transport de passagers constituée d'un plateau allongé supporté, d'un côté, par au moins un pied fixe et, du côté opposé, par un support solidaire du véhicule.

Quoique n'y étant pas limitée, l'invention vise plus particulièrement des tables pour voitures ou wagons de chemin de fer se trouvant entre deux sièges ou deux rangées de sièges disposés face à face. L'invention pourrait toutefois trouver d'autres applications, comme par exemple dans des autocars, bateaux, etc.

Ces tables sont généralement fixées à la paroi extérieure du wagon et sont supportées, du côté intérieur, par un pied fixe dressé sur le plancher du wagon. Du fait de la rigidité de leur support et donc de leur immobilité, ces tables sont gênantes pour la sortie et l'entrée des personnes assises de part et d'autre de la table.

Pour y remédier, on a déjà prévu des tables dont les plateaux sont constitués de plusieurs, par exemple trois, segments allongés reliés entre eux par des charnières. Le segment central est fixe et est supporté par le pied et la paroi du wagon, tandis que les deux segments longitudinaux extérieurs sont mobiles et peuvent être rabattus de 180° sur le segment central pour réduire la largeur de la table et faciliter ainsi les mouvements des personnes derrière la table.

Toutefois, cette solution n'a pas permis de résoudre tous les problèmes et en a même créé de nouveaux. Ainsi, les deux segments extérieurs ne peuvent être rabattus que lorsque la table est vide. Par ailleurs, les deux segments pivotants peuvent être soulevés accidentellement et faire tomber des objets qu'ils portent. En outre, les charnières entre le segment central et les segments latéraux constituent des points de faiblesse de la tablette nécessitant une surveillance accrue, voire des réparations occasionnelles.

Le but de la présente invention est de prévoir une nouvelle table du genre décrit dans le préambule qui facilite l'accès aux sièges de part et d'autre de la table, ainsi que la sortie de ces sièges, sans pour autant présenter les inconvénients des solutions connues.

Pour atteindre cet objectif, la présente invention prévoit une table du genre défini dans le préambule, qui est caractérisée en ce que ledit support solidaire du véhicule comporte une articulation avec un axe de pivotement vertical et en ce que le plateau est relié au pied par une glissière cintrée autour dudit axe de pivotement permettant au plateau de pivoter horizontalement autour dudit axe de pivotement vertical.

Ainsi, lorsqu'une personne assise derrière la table, souhaite quitter sa place, elle peut faire pivoter la table pour l'éloigner de son siège et la rapprocher du siège d'en face. Dès la sortie, la table peut à nouveau être pivotée dans sa position centrale pour ne pas gêner la personne d'en face, si ce siège est occupé. Un pivotement similaire de la table peut être effectué pour faciliter l'accès au siège le long de la table.

Le plateau peut aussi être réalisé en une seule pièce et, à l'évidence, ne souffre pas des inconvénients attachés à un plateau composé de plusieurs segments.

La glissière peut être constituée, dans sa version la plus simple, d'une tige courbe fixée par ses deux extrémités à la face inférieure du plateau et traversant une ouverture de même section dans la tête du pied.

La glissière est, de préférence, associée à un dispositif de stabilisation de la position centrale du plateau. Ce dispositif peut être constitué, dans sa version la plus simple, par un cliquet soumis à l'action d'un ressort coopérant avec une encoche correspondante prévue respectivement sur la tige et dans l'ouverture de la tête du pied ou vice-versa.

D'autres particularités et caractéristiques de l'invention ressortiront de la description d'un mode de réalisation avantageux d'une table pour un wagon de chemin de fer, présenté ci-dessous, à titre d'illustration, en référence aux dessins annexés, dans lesquels :
- la figure 1 est une représentation schématique en plan de la table vue d'en dessous de celle-ci ;
- la figure 2 est une vue schématique en section suivant le plan de coupe B-B' sur la figure 1 ;
- la figure 3 est une vue agrandie en section de la liaison entre le plateau et sa tablette de support ;
- la figure 4 est une vue en coupe agrandie de la liaison coulissante entre le plateau et son pied de support ;
- les figures 5 à 7 sont des vues analogues à celle de la figure 1 illustrant le plateau dans différentes positions angulaires.

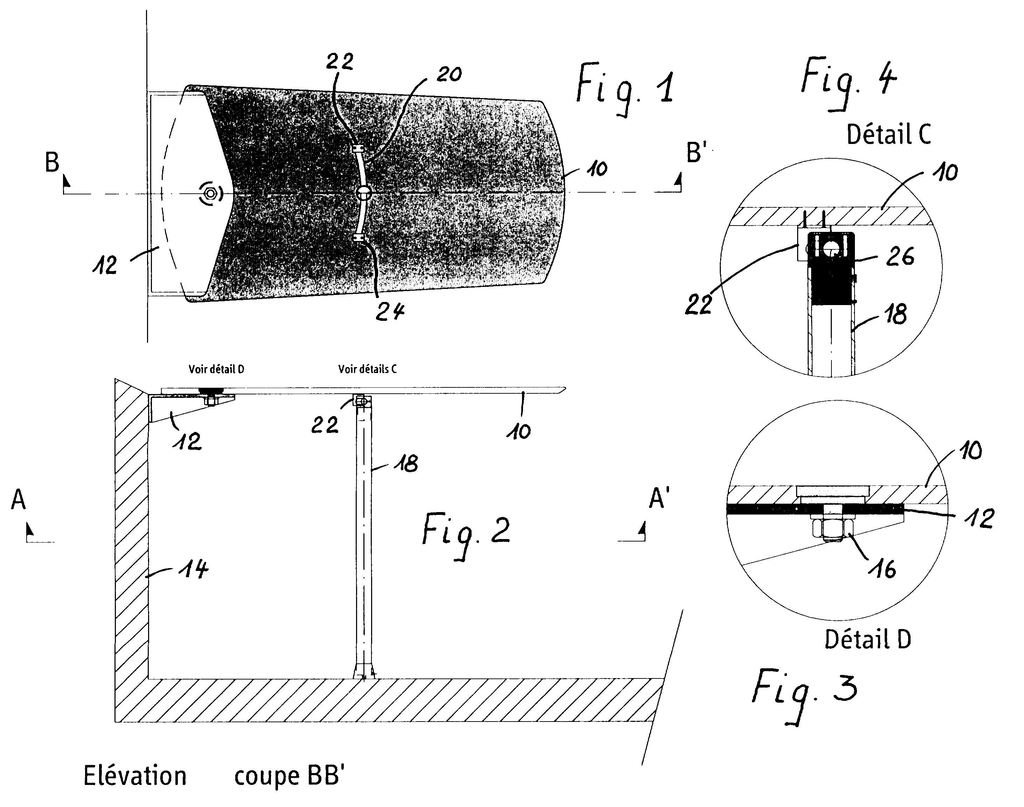

Comme on peut le voir sur les figures 1 et 2, la référence 10 désigne le plateau de la table qui, dans l'exemple représenté, a une forme légèrement trapézoïdale, se rétrécissant vers l'intérieur du wagon. Le côté extérieur au moins est, de préférence, légèrement courbe pour permettre le pivotement de la table. Le côté intérieur peut être droit ou courbe comme représenté sur les figures.

Le plateau 10 repose, par sa zone extérieure, sur une tablette de support 12 solidaire de la paroi extérieure 14 d'un wagon de chemin de fer. La liaison entre le plateau 10 et la tablette 12 est assurée, comme le montre la figure 3, par une vis 16 à tête noyée en surface, permettant au plateau 10 de pivoter horizontalement par rapport à la tablette 12 autour de l'axe de la vis 16.

Le plateau 10 est également supporté par un pied 18 dressé sur le plancher du wagon. La liaison entre le plateau 10 et le pied 18 est une liaison coulissante. A cet effet, le plateau 10 comporte, sur sa face inférieure, une tige 20, par exemple de section ronde, légèrement cintrée, dont le centre de courbure est l'axe de pivotement du plateau 10, c'est-à-dire l'axe de la vis 16. La tige 20 est fixée par ses deux extrémités, moyennant deux pattes 22 et 24, à la face inférieure du plateau 10. La tige 20 traverse une ouverture 26 (voir figure 4) de même section prévue dans la tête du pied 18.

La tige 20 est donc supportée et guidée dans le pied 18 et peut coulisser à travers l'ouverture 26 pour permettre le pivotement horizontal du plateau 10. A cet effet, la tige 20 et la partie supérieure du pied 18 sont, de préférence, en une matière à faible coefficient de friction, voire en matière autolubrifiante.

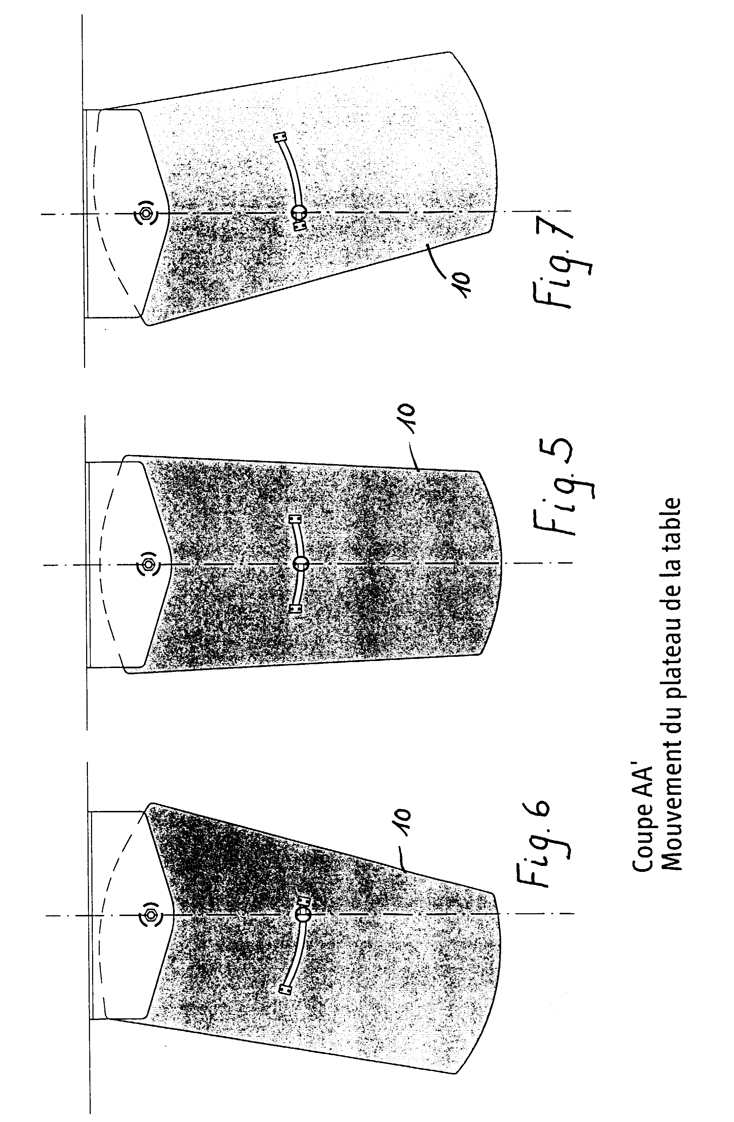

La figure 5 montre la position centrale du plateau 10, c'est-à-dire celle qu'il occupe normalement. La liaison entre le plateau 10 et le pied 18 est, de préférence, associée à un mécanisme non représenté, assurant la stabilisation du plateau 10 dans cette position. Ce mécanisme peut, par exemple, être constitué d'un cliquet ou d'une bille soumis à l'action d'un ressort coopérant avec une encoche correspondante prévue respectivement sur la tige et dans la paroi de l'ouverture 26 de la tête du pied 18 ou vice-versa.

Les figures 6 et 7 montrent les positions du plateau 10 après pivotement de celui-ci, à partir de la position de la figure 5 vers la droite, respectivement vers la gauche.

Il est évident que, pour une longueur donnée de la tige 20, l'amplitude de pivotement est d'autant plus grande que la tige 20 est plus rapprochée de la vis 16. Un tel rapprochement de la tige 20 de l'axe de pivotement du plateau 10 augmente toutefois la longueur du porte-à-faux du plateau 10. Un compromis raisonnable est réalisé lorsque la tige 20 et le pied 18 se trouvent environ dans la région centrale du plateau 10.

## Revendications

1. Table pour véhicule de transport de passagers constituée d'un plateau allongé (10) supporté, d'un côté, par au moins un pied fixe (18) et, du côté opposé, par un support (12) solidaire du véhicule, caractérisée en ce que ledit support (12) solidaire du véhicule comporte une articulation avec un axe de pivotement vertical et en ce que le plateau (10) est relié au pied (18) par une glissière cintrée autour dudit axe de pivotement permettant au plateau (10) de pivoter horizontalement autour dudit axe de pivotement vertical.

2. Table selon la revendication 1, caractérisée en ce que la glissière est constituée d'une tige courbe (20) fixée par ses deux extrémités à la face inférieure du plateau (10) et traversant une ouverture (26) du pied (18).

3. Table selon l'une quelconque des revendications 1 ou 2, caractérisée en ce que la glissière est associée à un dispositif de stabilisation de la position centrale du plateau (10).

4. Table selon l'une quelconque des revendications 1 à 4, caractérisée en ce que le côté de la table porté par le support (12) est convexe.
